# EUROPEAN PATENT SPECIFICATION

(11) **EP 2 861 377 B1**
(45) Date of publication and mention of the grant of the patent: **22.11.2017**
(21) Application number: 13806545.3
(22) Date of filing: 12.06.2013
(51) Int. Cl.: B24B 19/16, B23B 5/16

(54) **APPARATUS FOR WET GRINDING OF WELDING ELECTRODES, PARTICULARLY TUNGSTEN ELECTRODES**
VORRICHTUNG ZUM NASSSCHLEIFEN VON SCHWEISSELEKTRODEN, INSBESONDERE WOLFRAMELEKTRODEN
APPAREIL POUR MEULAGE AVEC ARROSAGE DES ÉLECTRODES DE SOUDURE, EN PARTICULIER LES ÉLECTRODES EN TUNGSTÈNE

(30) Priority: 18.06.2012 DK 201270340
(43) Date of publication of application: 22.04.2015
(73) Proprietor: AP Tignology ApS, 9560 Hadsund (DK)
(72) Inventor: ANDERSEN, Jens Oien, DK-9560 Hadsund (DK)
(74) Representative: Gregersen, Niels Henrik
(86) International application number: PCT/DK2013/050192
(87) International publication number: WO 2013/189497

(56) References cited:
- EP-A1- 0 822 882
- EP-A2- 1 262 279
- WO-A1-96/30162
- DE-A1-102006 052 904
- JP-A- 2008 137 113

## Description

### Field of the Invention

The present invention concerns an apparatus for wet grinding of welding electrodes, particularly tungsten electrodes, and of the kind specified in the preamble of claim 1.

### Background of the Invention

For use in TIG welding (tungsten inert gas welding) and plasma welding, tungsten welding electrodes are used which in order to achieve weld seams of high quality are to have well-defined pointed end. Surface properties as well as dimensions of the electrode point have particular significance to generating the electric arc produced by the electrodes and by means of which the welding wire for producing the weld seam is melted.

At the same time, the welding electrode is subjected to heavy wear due to the temperatures occurring at the welding operation so that already after a short period of time the welding electrode is not capable of producing weld seams of high quality. In practice, it is therefore often so that the welder carries a number of welding electrodes with him in order to replace them in the welding equipment. Alternatively, the welding electrodes are to be ground again which, however, requires that the workplace has e.g. a mobile electrode grinding apparatus at its disposal.

Grinding apparatuses of this type normally operate with a rotating grinding wheel where the welding electrodes are ground to point by pressing the electrodes against a side face of the grinding wheel at a desired angle. This grinding principle makes it complicated to vary the grinding angle or the point of the electrodes.

Besides, it is known that this grinding principle or apparatus implies some unsolved work environment problems in connection with the aggressive grinding dust formed by grinding welding electrodes containing tungsten.

WO 96/30162 A1 discloses an apparatus for wet grinding welding electrodes, in particular tungsten electrodes, the apparatus including a drive motor for a rotating grinding wheel and means adapted to fix a welding electrode at a certain angle relative to the grinding wheel, where the fixing means include an apparatus part arranged displaceably in parallel with the plane of the grinding wheel in a fixed, vertically extending guide, the apparatus part comprising two mutually displaced insertion openings or positions for an electrode holder, namely a first insertion opening or position opposite an arched angle scale corresponding to radius of the grinding wheel, and a second insertion opening or position situated and adapted to fasten the electrode in parallel with the plane of the grinding wheel as the vertical spacing between the insertion openings is equal to the spacing between the arched angle scale and the grinding wheel.

### Object of the Invention

On this background, the invention has the purpose of indicating an improved apparatus for wet grinding of welding electrodes of the kind mentioned in the introduction, and which by means of simple measures will make it easier to adjust the grinding angle. Furthermore, the apparatus according to the invention deals with the said work environment problems which are known in connection with e.g. dry grinding of tungsten electrodes.

### Description of the Invention

The grinding apparatus according to the invention is peculiar in that the fixing means include an angularly adjustable guide for an electrode holder, the guide arranged to be fixed at varying angular positions relative to a plane front side of the grinding wheel, the apparatus furthermore including a disc-shaped cutting device which is adapted to shorten welding electrodes to a defined length.

By simple technical means it hereby becomes possible to simplify adjustment of the grinding angle while at the same time dealing with the work environment problems associated with e.g. grinding of tungsten electrodes in that the grinding of welding electrodes as such is performed by wet grinding.

The apparatus according to the invention is suitably designed such that the cutting device is drivingly connected with the drive motor, preferably by a belt drive.

With the object of optimising collection of metal particles from the cutting device, the apparatus according to the invention may advantageously be so designed that the cutting device is adapted such that metal particles from a cutting disc in operation are directed towards a back wall in the grinding housing, and that in connection with the back wall there are means adapted for sprinkling the back wall with grinding liquid supplied from the top of the grinding wheel.

With the object of enabling direct reading of the actual angle setting, the apparatus according to the invention is so designed that it preferably at the front side includes a digital display which is adapted to show the actual angular position of the guide.

The electrode holder is adapted for manual clamping of the welding electrode to be ground in a simple and exact way. This means that individual variations of specific lengths of welding electrodes do not cause any problems.

Correspondingly, the apparatus according to the invention can be substantially simplified in that the electrode holder is adapted for manual rotation in the guide during grinding of the welding electrode.

The apparatus according to the invention may suitably be designed such that it includes an adjusting device for adjusting the length of the welding electrode.

In addition, the apparatus according to the invention may advantageously be designed such that an upper annular part of the guide is designed with a fine adjustment for stepwise adjustment of an active length of the welding electrode for flat grinding of an outermost end of the welding electrode.

In practice, this fine adjustment includes a stepwise rotation of the upper annular part guided by a number of locking balls - where e.g. each click adjusts the active length of the welding electrode by 0.1 mm - such that three clicks will correspond to an actual upwards displacement of the welding electrode by 0.3 mm. The flat grinding is effected by rotating the guide for the electrode holder to a position where the welding electrode stands at right angles to the front side of the grinding wheel.

With the object of optimising the service life of the grinding wheel, the apparatus according to the invention may advantageously be designed such that the guide is adapted for lateral displacement relative to the plane front side of the grinding wheel.

### Description of the Drawing

The invention is now described more closely in connection with the drawing, in which:
Fig. 1 shows a perspective view of an embodiment of an apparatus according to the invention;
Fig. 2 shows a detail in perspective view of the angular adjustment by the apparatus shown in Fig. 1;
Fig. 3 shows a detail in perspective view of the electrode holder for use in the apparatus shown in Fig. 1;
Fig. 4 shows a detail in perspective view for illustrating how the electrode holder is rotated manually during grinding;
Fig. 5 shows a detail in perspective view of a mechanism for setting correct length of the electrode;
Fig. 6 shows a detail in perspective view of an upper rotatable ring used for retracting the electrode point 0.1 mm per click for grinding the outermost point of the electrode flat;
Fig. 7 shows a detail in perspective view for illustrating how the electrode holder can be laterally displaced for better utilisation of the grinding wheel;
Fig. 8 shows a perspective view of a preferred embodiment of an apparatus according to the invention;
Fig. 9 shows a perspective view of the apparatus in Fig. 8, as seen from the opposite side; and
Fig. 10 shows a perspective view of the apparatus shown in Fig. 8, as seen from the back side.

### Detailed Description of Embodiments of the Invention

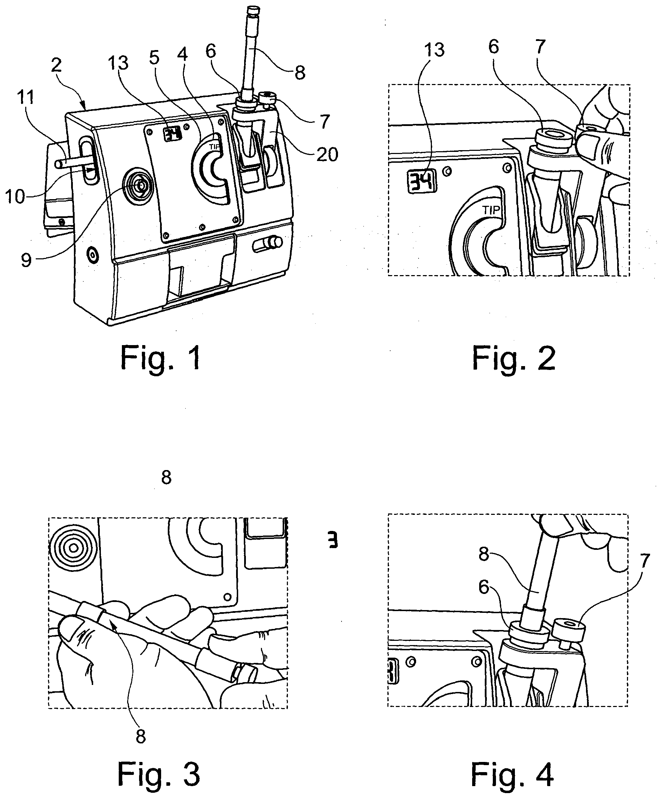

The apparatus 1 shown in Fig. 1 includes a rearwardly directed housing part which contains a not shown drive motor for a grinding wheel 4, the plane front side of which can be seen through a curving window 5 at the front side of the apparatus 2.

To the right of the window 5 appears an angularly adjustable guide 6 for an electrode holder 8, which guide 6 can be fixed at various angular positions relative to the plane front side of the grinding wheel 4 by means of a fixing screw 7.

To the left of the window 5, an insertion opening 9 of a cutting device 10 can be seen. A welding electrode can be inserted in the insertion opening 9 with the object of cutting off a part of the length of the welding electrode for forming an electrode point which subsequently is to be ground into a point by means of the apparatus 2.

With the object of avoiding cutting beard on the welding electrode and electrode point, respectively, the insertion opening 9 can advantageously be angled 1-2° relative to the plane of the cutting device.

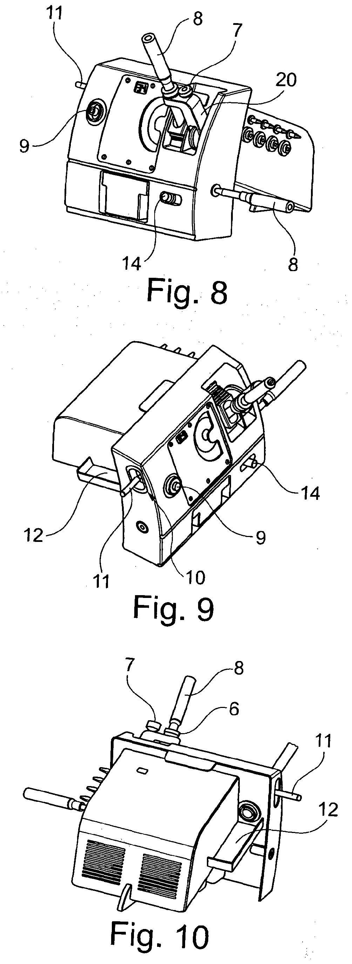

At the left side of the apparatus 2 is seen a operating lever 11 for the cutting device 10. By moving the operating lever 11 downwards, a rotating cutting disc will be pressed against the side of the welding electrode such that an outer end part thereof will be cut off for forming the electrode point which is conducted to a collecting channel 12 at the back side of the apparatus 2 (Figs. 9 and 10).

The rotating cutting disc of the cutting device 10 is drivingly connected with the grinding wheel 4 by means of a belt drive.

In Fig. 2 appears a digital display 13 clearly showing the actual angular position (34°) of the guide 6 for the electrode holder 8 relative to the plane front side of the grinding wheel 4. Fig. 3 served to show that the electrode holder 8 is adapted to be manually operated for clamping an electrode point in a known chuck with three-partite grip jaws.

Fig. 4 serves to indicate that the electrode holder 8 is rotated by hand during point grinding of an electrode point by pressing thereof against the plane front side of the grinding wheel 4.

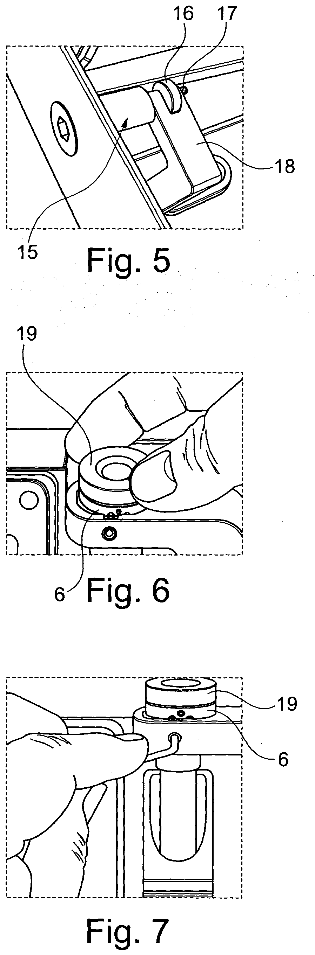

In Fig. 1, a set screw 14 is seen under the pivotable guide 6, the screw 14 belonging to a device 15 shown in Fig. 5 for adjusting the length of the electrode point. The adjustment itself is effected by means of a knurled nut 16 on a threaded rod 17 in that an angular holder 18 can be displaced laterally.

Fig. 6 serves to show that an upper annular part 19 of the guide 6 can be turned clickwise, each click representing a longitudinal displacement of the guide of 0.1 mm as the annular part 19 is connected with the guide by means of a locking ball that interacts with a number of complementarily shaped recesses.

Three clicks thus correspond to a longitudinal displacement of 0.3 mm, which e.g. is used for displacing the ground electrode point in direction away from the grinding wheel 4 before the guide 6 subsequently is pivoted to a position perpendicularly to the plane front side of the grinding wheel 4. At this position, an exact plane grinding of the outermost part of the electrode point can then be performed by moving it against the grinding wheel 4 again.

Fig. 7 serves to indicate that the guide 6 itself is adapted to be laterally displaced relative to a pivoting mechanism 20. Hereby is achieved a substantial increase in the capacity of the grinding wheel 4 which thereby can be reused a number of times corresponding to the possible lateral displacement of the guide, for example three grinding tracks on the grinding wheel 4.

Figs. 8-10 show a modified embodiment of a grinding apparatus 22 according to the invention where similar parts are denoted with the same reference numbers.

### Reference numbers of the drawing:

- 2: grinding apparatus (Figs. 1 -7)
- 4: grinding wheel
- 5: window
- 6: guide
- 7: fixing screw
- 8: electrode holder
- 9: insertion opening
- 10: cutting device
- 11: operating arm
- 12: collection channel
- 13: digital display
- 14: set screw
- 15: adjusting device
- 16: knurled nut
- 17: threaded part
- 18: angular holder
- 19: annular part
- 20: pivoting mechanism
- 22: grinding apparatus (Figs. 8-10)

## Claims

1. An apparatus (2, 22) for wet grinding of welding electrodes, in particular tungsten electrodes, including a drive motor for a rotating grinding wheel (4) extending into grinding liquid in a grinding housing, and means adapted to fix a welding electrode at a certain angle relative to the grinding wheel (4), **characterised in that** the fixing means include an angularly adjustable guide (6) for an electrode holder (8), the guide (6) arranged to be fixed at varying angular positions relative to a plane front side of the grinding wheel, the apparatus (2, 22) including a disc-shaped cutting device (10) which is adapted to shorten welding electrodes to a defined length.

2. Apparatus (2, 22) according to claim 1, **characterised in that** the cutting device (10) is drivingly connected with the drive motor via a belt drive.

3. Apparatus (2, 22) according to claim 1 or 2, **characterised in that** the cutting device (10) is adapted such that metal particles from a cutting disc in operation are directed towards a back wall in the grinding housing, and that in connection with the back wall there are means adapted for sprinkling the back wall with grinding liquid supplied from the top of the grinding wheel (4).

4. Apparatus (2, 22) according to one of claims 1-3, **characterised by** including a digital display (13) which is adapted to show the actual angular position of the guide (6).

5. Apparatus (2, 22) according to one of claims 1-4, **characterised in that** the electrode holder (8) is adapted for manual clamping of the welding electrode to be ground.

6. Apparatus (2, 22) according to one of claims 1-5, **characterised in that** the electrode holder (8) is adapted for manual rotation in the guide (6) during grinding of the welding electrode.

7. Apparatus (2, 22) according to one of claims 1-6, **characterised in that** it includes an adjusting device (15) for adjusting the length of the welding electrode.

8. Apparatus (2, 22) according to one of claims 1-7, **characterised in that** an upper annular part (19) of the guide (6) is designed with a fine adjustment for stepwise adjustment of an active length of the welding electrode for flat grinding of an outermost end of the welding electrode.

9. Apparatus (2, 22) according to one of claims 1-8, **characterised in that** the guide (6) is adapted for lateral displacement relative to the plane front side of the grinding wheel (4).

## Patentansprüche

1. Vorrichtung (2, 22) zum Nassschleifen von Schweißelektroden, insbesondere Wolframelektroden, umfassend einen Treibmotor für ein rotierendes Schleifrad (4), das in eine Schleifflüssigkeit in einem Schleifkabinett eintaucht, sowie zur Befestigung einer Schweißelektrode in einem bestimmten Winkel relativ zum Schleifrad (4) vorgesehene Mittel, **dadurch gekennzeichnet, dass** die Befestigungsmittel eine winkelverstellbare Führung (6) für eine Schweißelektrodenhalterung (8) umfassen, wobei die Führung (6) zur Befestigung an verschiedenen Winkelpositionen relativ zu einer ebenen Vorderseite des Schleifrads vorgesehen ist, und die Vorrichtung (2, 22) einschließlich eine scheibenförmige Schneidvorrichtung (10) zur Abkürzung der Schweißelektroden zu einer definierten Länge eingerichtet ist.

2. Vorrichtung (2, 22) nach Anspruch 1, **dadurch gekennzeichnet, dass** die Schneidvorrichtung (10) durch einen Bandantrieb mit dem Antriebsmotor treibend verbunden ist.

3. Vorrichtung (2, 22) nach Anspruch 1 oder 2, **dadurch gekennzeichnet, dass** die Schneidvorrichtung (10) derart ausgelegt ist, dass Metallteilchen aus einer arbeitenden Schneidscheibe gegen eine Rückwand im Schleifkabinett gerichtet werden, und dass in Verbindung mit der Rückwand Mittel zum Besprühen der Rückwand mit einer von dem Oberteil des Schleifrades (4) versorgten Schleifflüssigkeit vorgesehen sind.

4. Vorrichtung (2, 22) nach einem der Ansprüche 1-3, **dadurch gekennzeichnet, dass** sie einen Digitalbildschirm (13) zur Anzeige der Winkelposition der Führung (6) umfasst.

5. Vorrichtung (2, 22) nach einem der Ansprüche 1-4, **dadurch gekennzeichnet, dass** die Elektrodenhalterung (8) zur manuellen Befestigung der zu schleifenden Schweißelektrode dient.

6. Vorrichtung (2, 22) nach einem der Ansprüche 1-5, **dadurch gekennzeichnet, dass** die Elektrodenhalterung (8) zur manuellen Rotation in der Führung (6) während des Schleifens der Schweißelektrode dient.

7. Vorrichtung (2, 22) nach einem der Ansprüche 1-6, **dadurch gekennzeichnet, dass** sie eine Einstellvorrichtung (15) zum Einstellen der Länge der Schweißelektrode umfasst.

8. Vorrichtung (2, 22) nach einem der Ansprüche 1-7, **dadurch gekennzeichnet, dass** ein oberer, ringförmiger Teil (19) der Führung (6) eine Feineinstellung für schrittweise Einstellung der aktiven Länge der Schweißelektrode für das Flachschleifen eines äußersten Endes der Schweißelektrode aufweist.

9. Vorrichtung (2, 22) nach einem der Ansprüche 1-8, **dadurch gekennzeichnet, dass** die Führung (6) für laterale Verschiebung relativ zur planen Vorderseite des Schleifrades (4) eingerichtet ist.

## Revendications

1. Un appareil (2, 22) pour le meulage par voie humide d'électrodes de soudage, en particulier d'électrodes en tungstène, comprenant un moteur d'entraînement pour une meule rotative (4) s'étendant dans un liquide abrasif dans un carter de broyage, et des moyens conçus pour fixer une électrode de soudage selon un certain angle par rapport à la meule (4), **caractérisé en ce que** les moyens de fixation comprennent un guide réglable angulairement (6) pour un support d'électrode (8), le guide (6) agencé pour être fixé à des positions angulaires variables par rapport à une face frontale plane de la meule, l'appareil (2, 22) comprenant un dispositif de coupe en forme de disque (10) qui est conçu pour raccourcir des électrodes de soudage à une longueur définie.

2. Appareil (2, 22) selon la revendication 1, **caractérisé en ce que** le dispositif de coupe (10) est relié par entraînement au moteur d'entraînement par l'intermédiaire d'un entraînement par courroie.

3. Appareil (2, 22) selon la revendication 1 ou 2, **caractérisé en ce que** le dispositif de coupe (10) est conçu de telle sorte que des particules métalliques provenant d'un disque de coupe en fonctionnement sont dirigées vers une paroi arrière dans le carter de broyage, et qu'il y a, en liaison avec la paroi arrière, des moyens conçus pour arroser la paroi arrière avec un liquide de broyage fourni par la partie supérieure de la meule (4).

4. Appareil (2, 22) selon l'une des revendications 1-3, **caractérisé en ce qu'**il comprend un affichage numérique (13) qui est conçu pour montrer la position angulaire réelle du guide (6).

5. Appareil (2, 22) selon l'une des revendications 1-4, **caractérisé en ce que** le support d'électrode (8) est adapté pour un serrage manuel de l'électrode de soudage devant être meulée.

6. Appareil (2, 22) selon l'une des revendications 1-5, **caractérisé en ce que** le support d'électrode (8) est adapté pour une rotation manuelle dans le guide (6) pendant le meulage de l'électrode de soudage.

7. Appareil (2, 22) selon l'une des revendications 1-6, **caractérisé en ce qu'**il comprend un dispositif d'ajustement (15) pour ajuster la longueur de l'électrode de soudage.

8. Appareil (2, 22) selon l'une des revendications 1-7, **caractérisé en ce qu'**une partie annulaire supérieure (19) du guide (6) est conçue avec un réglage fin pour un réglage graduel d'une longueur active de l'électrode de soudage pour un meulage à plat d'une extrémité la plus à l'extérieur de l'électrode de soudage.

9. Appareil (2, 22) selon l'une des revendications 1-8, **caractérisé en ce que** le guide (6) est adapté pour un déplacement latéral par rapport à la face frontale plane de la meule (4).
